# EUROPÄISCHE PATENTANMELDUNG

(11) **EP 4 016 285 A1**
(43) Veröffentlichungstag der Anmeldung: **22.06.2022**
(21) Anmeldenummer: 21203533.1
(22) Anmeldetag: 19.10.2021
(51) Int. Cl.: G06F 8/65, B60L 53/30

(54) **TECHNIK ZUR ÜBERTRAGUNG EINES SOFTWAREUPDATEPAKETS FÜR EINE SOFTWARE EINER LADESTATION FÜR ELEKTRISCH BETRIEBENE KRAFTFAHRZEUGE**

(30) Priorität: 18.12.2020 DE 102020134096
(71) Anmelder: innogy eMobility Solutions GmbH, 44139 Dortmund (DE)
(72) Erfinder: Kledewski, Ingo, 44319 Dortmund (DE); Diekert, Jens, 45257 Essen (DE)
(74) Vertreter: Gottschald, Jan

(57) **Zusammenfassung**

Die vorliegende Offenbarung betrifft ein tragbares Endgerät, umfassend einen Prozessor und eine Sende- und Empfangsvorrichtung, die dazu eingerichtet ist, zumindest einen Teil eines Softwareupdatepakets für eine Software einer Ladestation für elektrisch betriebene Kraftfahrzeuge über eine lokale Kommunikationsverbindung an die Ladestation zu senden. Ferner betrifft die Offenbarung einen Server, der dazu eingerichtet ist, an das tragbare Endgerät Programmanweisungen zu senden, wobei die Programmanweisungen den zumindest einen Teil umfassen, und wobei die Programmanweisungen entweder ein Anwendungsprogramm für das tragbare Endgerät oder ein Update für ein Anwendungsprogramm für das tragbare Endgerät bilden. Des Weiteren wird eine Ladestation, ein Verfahren und ein Computerprogrammprodukt beschrieben.

## Beschreibung

### TECHNISCHES GEBIET

Die vorliegende Offenbarung betrifft allgemein das technische Gebiet der Aktualisierung von Software. Insbesondere betrifft die vorliegende Offenbarung ein tragbares Endgerät, eine Ladestation, einen Server, ein Verfahren und ein Computerprogra m mprodukt.

### HINTERGRUND

Nachhaltige Verkehrskonzepte genießen in letzter Zeit eine immer größere Bedeutung. Das zeigt sich beispielsweise an dem stetig zunehmenden Absatz von Kraftfahrzeugen, die zumindest teilweise elektrisch betrieben werden. Um die Attraktivität solch elektrisch betriebener Kraftfahrzeuge weiter zu erhöhen und diese flächendeckend einsetzen zu können, wird eine Infrastruktur mit vielen räumlich beabstandeten Ladestationen benötigt.

Teilweise werden Ladestationen an Orten errichtet, an denen eine Kommunikationsanbindung der Ladestation an eine IT-Infrastruktur (z.B. über eine Mobilfunkverbindung) eingeschränkt ist. Die Einschränkung bezieht sich in erster Linie darauf, dass eine Kommunikation einer Ladestation mit der IT-Infrastruktur (auch Backend genannt) nicht mit einer ausreichend hohen Übertragungsgeschwindigkeit durchgeführt werden kann. Als Beispiele für Orte mit eingeschränkter Kommunikationsanbindung können Orte mit Mobilfunklöchern, Parkhäuser und Tiefgaragen genannt werden. Zwar ist es meist möglich, zwischen der Ladestation und dem Backend (z.B. einem Server der IT-Infrastruktur) kurze Steuerbefehle oder andere Nachrichten zu übertragen, allerdings ist bei einer eingeschränkten Kommunikationsanbindung eine Übertragung von größeren Datenmengen, wie z.B. eines Softwareupdatepakets, nur unter erheblichen Aufwand möglich.

In Fällen mit eingeschränkter Kommunikationsanbindung ist es mit den bekannten Verfahren schwierig oder gar unmöglich, ein Softwareupdate für eine Software der jeweiligen Ladestation auszuführen.

Aus der DE 10 2018 123 613 A1 ist ein allgemeines Verfahren für ein Softwareupdate einer Ladestation bekannt, das Dokument DE 10 2018 123 129 A1 beschreibt eine Ladestation für Elektrofahrzeuge, und die WO 2020/069820 A1 offenbart ein Verfahren zum Aktualisieren einer Ladestationssoftware unter Zuhilfenahme einer Steuerungsanordnung eines Kraftfahrzeugs.

### KURZER ABRISS

Der vorliegenden Offenbarung liegt die Aufgabe zugrunde, ein einfaches und effizientes Übertragen eines Softwareupdatepakets an eine Ladestation, insbesondere einer Ladestation mit einer eingeschränkten Kommunikationsanbindung an eine IT-Infrastruktur, zu ermöglichen. Eine weitere Aufgabe kann darin gesehen werden, in einfacher und zuverlässiger Weise ein Softwareupdate einer Software einer Ladestation, insbesondere einer Ladestation mit einer eingeschränkten Kommunikationsanbindung an eine IT-Infrastruktur, zu ermöglichen. Darüber hinaus kann es als Aufgabe angesehen werden, ein nutzerfreundliches Übertragen eines Softwareupdatepakets von einem Server auf ein tragbares Endgerät zu ermöglichen.

Gemäß einem ersten Aspekt wird ein tragbares Endgerät bereitgestellt, umfassend einen Prozessor und eine Sende- und Empfangsvorrichtung, die dazu eingerichtet ist, zumindest einen Teil eines Softwareupdatepakets für eine Software einer Ladestation für elektrisch betriebene Kraftfahrzeuge über eine lokale Kommunikationsverbindung an die Ladestation zu senden.

Bei dem tragbaren Endgerät kann es sich um ein Mobiltelefon, beispielsweise ein Smartphone, um einen Tablet-Computer, um einen Laptop, um ein sogenanntes "Wearable" (z.B. eine Smartwatch oder ein tragbarer Fitness-Tracker) und dergleichen handeln. Insbesondere kann das tragbare Endgerät ein für Endnutzer frei verkäufliches Endgerät sein, was also nicht nur ausgewählten Wartungstechnikern, sondern beliebigen Endnutzern zur Verfügung steht. So kann ein Fahrer bzw. Halter eines elektrisch betriebenen Kraftfahrzeugs in die Lage versetzt werden, mittels seines tragbaren Endgeräts den zumindest einen Teil des Softwareupdatepakets über die lokale Kommunikationsverbindung an die Ladestation zu senden. Der zumindest eine Teil kann also anstelle über eine eingeschränkte Kommunikationsverbindung zwischen einer IT-Infrastruktur und der Ladestation in vorteilhafter Weise über die lokale Kommunikationsverbindung zwischen dem tragbaren Endgerät und der Ladestation gesendet werden.

Die Sende- und Empfangsvorrichtung kann zum Senden und Empfangen von Daten nach einem standardisierten Übertragungsprotokoll ausgelegt sein. Bei der lokalen Kommunikationsverbindung handelt es sich beispielsweise um eine WiFi- oder WLAN-Verbindung, um eine Bluetooth-Verbindung oder um eine NFC-Verbindung. Andere Arten lokaler Kommunikationsverbindungen sind ebenso denkbar. Vorzugsweise handelt es sich bei der lokalen Kommunikationsverbindung um eine Punkt-zu-Punkt-Verbindung. Die Sende- und Empfangsvorrichtung kann dazu ausgelegt sein, die lokale Kommunikationsverbindung derart bereitzustellen, dass diese eine Entfernung von mehreren Zentimetern oder Metern überbrückt bzw. überbrücken kann, beispielsweise eine Entfernung von 50 cm, 3 m oder 15 m.

Das Softwareupdatepaket kann den zumindest einen Teil und zumindest einen weiteren Teil umfassen. Die Sende- und Empfangsvorrichtung kann ferner dazu eingerichtet sein, den zumindest einen Teil separat (z.B. logisch und/oder zeitlich getrennt) von dem zumindest einen weiteren Teil an die Ladestation zu senden. Beispielsweise ist die Sende- und Empfangsvorrichtung dazu eingerichtet, den zumindest einen Teil in einem Datenpaket an die Ladestation zu senden, welches nicht den zumindest einen weiteren Teil umfasst.

Die Sende- und Empfangsvorrichtung ist beispielsweise dazu eingerichtet, den zumindest einen Teil erst dann an die Ladestation zu senden, wenn der zumindest eine weitere Teil erfolgreich (z.B. vollständig, fehlerfrei und/oder innerhalb eines vorgegebenen Zeitfensters) an die Ladestation gesendet wurde. Beispielsweise ist die Sende- und Empfangsvorrichtung dazu eingerichtet, von der Ladestation einen Empfangsbericht zu empfangen, der angibt, ob oder dass der zumindest eine Teil korrekt an die Ladestation gesendet wurde. Der Prozessor des Endgeräts kann dazu eingerichtet sein, auf Grundlage des Empfangsberichts zu bestimmen, ob der zumindest eine Teil an die Ladestation gesendet werden soll oder nicht, und die Sende- und Empfangsvorrichtung entsprechend zu instruieren.

Die Sende- und Empfangsvorrichtung kann dazu eingerichtet sein, den zumindest einen Teil und den zumindest einen weiteren Teil an die Ladestation zu senden. Gemäß einem Beispiel ist die Sende- und Empfangsvorrichtung dazu eingerichtet, zunächst den zumindest einen weiteren Teil an die Ladestation zu senden und anschließend den zumindest einen Teil. Die Reihenfolge der einzelnen Teile kann jedoch auch anders gewählt sein. So ist die Sende- und Empfangsvorrichtung in einem weiteren Beispiel dazu eingerichtet, zunächst den zumindest einen Teil an die Ladestation zu senden und anschließend den zumindest einen weiteren Teil.

Die Sende- und Empfangsvorrichtung kann ferner dazu eingerichtet sein, den zumindest einen Teil von einem Server zu empfangen. Insbesondere kann die Sende-und Empfangsvorrichtung dazu eingerichtet sein, Programmanweisungen für das tragbare Endgerät von einem Server zu empfangen, wobei die Programmanweisungen den zumindest einen Teil umfassen. Beispielsweise bilden (z.B. entsprechen oder sind) die Programmanweisungen ein Anwendungsprogramm für das tragbare Endgerät. Die Programmanweisungen können aber auch ein Update für ein Anwendungsprogramm für das tragbare Endgerät bilden.

Der Server kann ein Teil der mit der Ladestation verbundenen IT-Infrastruktur sein. Alternativ kann der Server mit der IT-Infrastruktur kommunikativ verbunden sein. Insbesondere ist der Prozessor des tragbaren Endgeräts dazu eingerichtet, beispielsweise mittels einer auf dem tragbaren Endgerät ausgeführten Marktplatz-Anwendung auf den Server zuzugreifen, um von diesem die Programmanweisungen anzufordern und/oder zu empfangen. Bei der Marktplatz-Anwendung kann es sich um GOOGLE PLAY^{®} oder um den APP STORE^{®} der Firma Apple Inc. handeln. Zusätzlich oder alternativ kann der Prozessor des tragbaren Endgeräts dazu eingerichtet sein, beispielsweise mittels einer auf dem tragbaren Endgerät ausgeführten Update-Anwendung auf den Server zuzugreifen, um von diesem die Programmanweisungen anzufordern und/oder zu empfangen. Die Update-Anwendung kann Teil eines Betriebssystems des tragbaren Endgeräts sein. Die Sende- und Empfangsvorrichtung kann dazu eingerichtet sein, die Programmanweisungen über eine Mobilfunkverbindung oder eine lokale Netzwerkverbindung (z.B. über ein WLAN-Netzwerk mit Internetanschluss) zu empfangen. Vorzugsweise ist die Sende- und Empfangsvorrichtung dazu eingerichtet, die Programmanweisungen über das Internet von dem Server zu empfangen.

Das Anwendungsprogramm für das tragbare Endgerät kann eine sogenannte "App" sein, insbesondere eine App für ein Smartphone oder einen Tablet-Computer. Beispielsweise ist das Anwendungsprogramm dazu eingerichtet, wenn es auf einem Prozessor (z.B. dem Prozessor des tragbaren Endgeräts) ausgeführt wird, den Prozessor zu instruieren (z.B. zu konfigurieren oder anzuweisen), eine freie Ladestation zu suchen. Hierzu kann durch das Anwendungsprogramm bzw. den Prozessor zum Beispiel auf die IT-Infrastruktur oder den Server zugegriffen werden, an welche(n) eine Vielzahl von Ladestationen anschlossen sind. Das Anwendungsprogramm kann dazu eingerichtet sein, wenn es auf dem Prozessor des tragbaren Endgeräts ausgeführt wird, diesen Prozessor zu instruieren, eine Kompatibilität zwischen dem mobilen Kommunikationsgerät und der Ladestation und/oder eine Kompatibilität zwischen dem Softwareupdatepaket und der Ladestation zu ermitteln. Das Anwendungsprogramm kann dazu eingerichtet sein, wenn es von dem Prozessor ausgeführt wird, den Prozessor zu instruieren, einen Ladevorgang durch die Ladestation zu überwachen, zu steuern, freizugeben, einzuleiten und/oder zu beenden. Das Anwendungsprogramm kann eine Bezahlfunktion bereitstellen, mittels der ein von der Ladestation durchgeführter oder durchzuführender Ladevorgang bezahlt werden kann.

Der Prozessor des tragbaren Endgeräts kann dazu eingerichtet sein, das Softwareupdatepaket aus den Programmanweisungen zu extrahieren und in den zumindest einen Teil und zumindest einen weiteren Teil (z.B. den bereits oben beschriebenen zumindest einen weiteren Teil) aufzutrennen. Beispielsweise enthält das Softwareupdatepaket Instruktionen oder Markierungen, anhand derer der Prozessor die Auftrennung zu bewirken vermag. Der Prozessor des tragbaren Endgeräts kann dazu eingerichtet sein, das Softwareupdatepaket unter Berücksichtigung einer (z.B. aktuellen, prognostizierten, durchschnittlichen, minimalen und/oder maximalen) Datenübertragungsrate der lokalen Kommunikationsverbindung in den zumindest einen Teil und den zumindest einen weiteren Teil aufzuteilen oder zu untergliedern. Die Datenübertragungsrate kann hierbei insbesondere dazu genutzt werden, die Größe des zumindest einen Teils situationsadäquat zu wählen. Der Prozessor kann also dazu eingerichtet sein, das Softwareupdatepaket in eine Vielzahl von Teilen zu untergliedern, deren jeweilige Größe zu der Datenübertragungsrate der lokalen Kommunikationsverbindung passt. Alternativ oder zusätzlich kann der Prozessor dazu eingerichtet sein, von einer Vielzahl von Teilen des Softwareupdatepakets den zumindest einen Teil auszuwählen, der eine Größe aufweist, welche zu der Datenübertragungsrate der lokalen Kommunikationsverbindung passt, und die Sende- und Empfangsvorrichtung zu instruieren, den ausgewählten Teil an die Ladestation zu senden. Der von der Sende- und Empfangsvorrichtung an die Ladestation gesendete Teil kann also eine Größe aufweisen, welche zu der (z.B. aktuellen, prognostizierten, durchschnittlichen, minimalen und/oder maximalen) Datenübertragungsrate der lokalen Kommunikationsverbindung passt. Ob dies der Fall ist, kann der Prozessor anhand einer diesem bekannten Korrelationstabelle ermitteln, die z.B. in einer Speichereinheit auf dem tragbaren Endgerät gespeichert ist.

Der zumindest eine Teil kann eine (z.B. einzigartige und/oder spezifische) Prüfsumme umfassen oder beinhalten. Die Prüfsumme kann von dem Prozessor des tragbaren Endgeräts oder von dem Server bestimmt und dem zumindest einen Teil angeheftet bzw. in diesen inkludiert werden. Alternativ oder zusätzlich kann der zumindest eine weitere Teil eine derartige Prüfsumme umfassen oder beinhalten. Vorzugsweise umfassen alle von der Sende- und Empfangsvorrichtung an die Ladestation gesendeten Teile des Softwareupdatepakets jeweils eine Prüfsumme.

Der zumindest eine Teil ist beispielsweise ein letzter Teil des Softwareupdatepakets (z.B. ein letzter der Ladestation fehlender Teil, ein letzter noch nicht an die Ladestation gesendeter Teil und/oder ein letzter Teil aus einer vorgegebenen Reihenfolge an die Ladestation zu sendender Teile) und umfasst eine eindeutige Kennzeichnung als der letzte Teil. Alternativ kann der zumindest eine weitere Teil ein letzter Teil des Softwareupdatepakets sein und eine eindeutige Kennzeichnung als der letzte Teil umfassen. Die Kennzeichnung kann von dem Prozessor des tragbaren Endgeräts oder von dem Server bestimmt und dem zumindest einen Teil angeheftet oder in diesen eingeschrieben bzw. inkludiert werden.

Die Prüfsumme und/oder die eindeutige Kennzeichnung als der letzte Teil können Teil von Metadaten sein. Der zumindest eine Teil bzw. der zumindest eine weitere Teil kann den (z.B. gesamten) Inhalt eines Datenpakets bilden. Die Metadaten sind beispielsweise dem Datenpaket zugeordnet oder Bilden den Kopf des Datenpakets.

Die Sende- und Empfangsvorrichtung ist beispielsweise dazu eingerichtet ist, den zumindest einen Teil an die Ladestation zu senden, sobald ein Ladevorgang durch die Ladestation begonnen und/oder sobald die lokale Kommunikationsverbindung aufgebaut wurde. Insbesondere kann der Beginn des Ladevorgangs und/oder der erfolgreiche Aufbau der lokalen Kommunikationsverbindung das Senden des zumindest einen Teils auslösen. In einem Beispiel ist die Sende- und Empfangsvorrichtung dazu eingerichtet, eine zweite (beispielsweise lokale) Kommunikationsverbindung mit der Ladestation aufzubauen. In diesem Fall kann die Sende- und Empfangsvorrichtung dazu eingerichtet sein, den zumindest einen Teil an die Ladestation zu senden, sobald die zweite Kommunikationsverbindung aufgebaut wurde. Der erfolgreiche Aufbau der lokalen Kommunikationsverbindung kann den erfolgreichen Abschluss einer Authentifizierung des tragbaren Endgeräts an der Ladestation und/oder den erfolgreichen Abschluss einer Authentifizierung der Ladestation an dem tragbaren Endgerät, insbesondere durch das Anwendungsprogramm, umfassen. Die Sende- und Empfangsvorrichtung ist beispielsweise dazu eingerichtet ist, den zumindest einen Teil an die Ladestation zu senden, sobald die Ladestation mit einem zu ladenden Kraftfahrzeug über ein Ladekabel verbunden wird.

Die Sende- und Empfangsvorrichtung kann ferner dazu eingerichtet sein, von der Ladestation oder einem Server (z.B. dem oben beschriebenen Server) Informationen über einen momentanen Stand der Software der Ladestation und/oder eine momentane Hardwarekonfiguration der Ladestation zu empfangen. Der Prozessor ist in diesem Fall beispielsweise dazu eingerichtet, anhand der Informationen zu überprüfen, ob das Softwareupdatepaket zur Aktualisierung der Software der Ladestation geeignet ist. Beispielsweise ist der Prozessor dazu eingerichtet, die Informationen mit Daten aus dem Softwareupdatepaket oder dem zumindest einen Teil des Softwareupdatepakets zu vergleichen, um zu überprüfen, ob das Softwareupdatepaket zur Aktualisierung der Software der Ladestation geeignet ist. Die Sende- und Empfangsvorrichtung kann dazu eingerichtet sein, den zumindest einen Teil nur dann an die Ladestation zu senden, wenn das Softwareupdatepaket zur Aktualisierung der Software der Ladestation geeignet ist.

Die Sende- und Empfangsvorrichtung kann dazu eingerichtet sein, von der Ladestation oder einem Server (z.B. dem oben beschriebenen Server) einen Updatestatus zu empfangen, der eine Anzahl und/oder Kennung von der Ladestation empfangener Teile des Softwareupdatepakets angibt. In diesem Fall ist der Prozessor beispielsweise dazu eingerichtet, anhand des Updatestatus zu bestimmen, welche Teile des Softwareupdatepakets der Ladestation fehlen. Beispielsweise ist der Prozessor dazu eingerichtet, den Updatestatus mit Daten aus dem Softwareupdatepaket oder dem zumindest einen Teil des Softwareupdatepakets, insbesondere mit einer Gesamtzahl der Teile des Softwareupdatepakets oder mit Kennungen sämtlicher Teile des Softwareupdatepakets, zu vergleichen, um zu bestimmen, welche Teile des Softwareupdatepakets der Ladestation fehlen. Die Sende- und Empfangsvorrichtung kann dazu eingerichtet sein, den zumindest einen Teil nur dann an die Ladestation zu senden, wenn er ein der Ladestation fehlender Teil ist.

Gemäß einem zweiten Aspekt ist eine Ladestation für elektrisch betriebene Kraftfahrzeuge vorgesehen, wobei die Ladestation einen Prozessor und eine Sende-und Empfangsvorrichtung umfasst, die dazu eingerichtet ist, von einem tragbaren Endgerät über eine lokale Kommunikationsverbindung zumindest einen Teil eines Softwareupdatepakets für eine Software der Ladestation zu empfangen.

Der Prozessor der Ladestation kann dazu eingerichtet sein, zu überprüfen, ob der zumindest eine Teil korrekt (z.B. vollständig und/oder fehlerfrei) empfangen wurde. Die Sende- und Empfangseinrichtung kann dazu eingerichtet sein, einen Empfangsbericht (z.B. ein "ACK") an das tragbare Endgerät, einen Server und/oder eine IT-Infrastruktur zu senden, der angibt, ob oder dass der zumindest eine Teil korrekt von der Ladestation empfangen wurde. Der Prozessor kann ferner dazu eingerichtet sein, den zumindest einen Teil zu verwerfen, falls (z.B. nur falls) der zumindest eine Teil nicht korrekt empfangen wurde. Der Prozessor ist beispielsweise dazu eingerichtet, anhand einer von dem zumindest einen Teil umfassten Prüfsumme zu überprüfen, ob der zumindest eine Teil korrekt empfangen wurde. Die Prüfsumme kann Teil von Metadaten sein.

Der Prozessor kann dazu eingerichtet sein, zu prüfen, ob der zumindest eine Teil ein letzter Teil des Softwareupdatepakets ist. Der Prozessor ist beispielsweise dazu eingerichtet, eine Aktualisierung der Software der Ladestation unter Verwendung des Softwareupdatepakets durchzuführen, falls (z.B. nur falls) der zumindest eine Teil der letzte Teil des Softwareupdatepakets ist. Der Prozessor ist beispielsweise dazu eingerichtet, anhand einer von dem zumindest einen Teil umfassten eindeutigen Kennzeichnung als der letzte Teil zu prüfen, ob der zumindest eine Teil der letzte Teil des Softwareupdatepakets ist. Die eindeutige Kennzeichnung kann Teil von Metadaten sein.

Die Sende- und Empfangsvorrichtung der Ladestation kann dazu eingerichtet sein, Informationen über einen momentanen Stand der Software der Ladestation und/oder eine momentane Hardwarekonfiguration der Ladestation an das tragbare Endgerät, den Server und/oder die IT-Infrastruktur zu senden. Die Sende- und Empfangsvorrichtung der Ladestation kann dazu eingerichtet sein, einen Updatestatus, der eine Anzahl und/oder Kennung von der Ladestation empfangener Teile des Softwareupdatepakets angibt, an das tragbare Endgerät, den Server und/oder die IT-Infrastruktur bzw. das Backend zu senden. Die Sende- und Empfangsvorrichtung der Ladestation kann dazu eingerichtet sein, zumindest einen weiteren Teil oder alle weiteren Teile des Softwareupdatepakets von dem tragbaren Endgerät, einem anderen tragbaren oder nicht tragbaren Endgerät, dem Server und/oder der IT-Infrastruktur zu empfangen.

Gemäß einem dritten Aspekt ist ein Verfahren zum Aktualisieren einer Software einer Ladestation für elektrisch betriebene Kraftfahrzeuge vorgesehen, umfassend den folgenden durch die Ladestation ausgeführten Verfahrensschritt: Empfangen zumindest eines Teil eines Softwareupdatepakets für die Software der Ladestation von einem tragbaren Endgerät über eine lokale Kommunikationsverbindung.

Das Verfahren kann weitere Schritte umfassen, wie sie aus der Beschreibung des ersten und zweiten Aspekts hervorgehen. Insbesondere kann das Verfahren einen oder mehrere der folgenden Schritte umfassen: Empfangen zumindest eines weiteren Teils des Softwareupdatepakets; Senden von Informationen über einen momentanen Stand der Software der Ladestation und/oder eine momentane Hardwarekonfiguration der Ladestation; Senden von einem Updatestatus, der eine Anzahl und/oder Kennung von der Ladestation empfangener Teile des Softwareupdatepakets angibt. Der zumindest eine weitere Teil des Softwareupdatepakets kann von dem tragbaren Endgerät, einem anderen tragbaren oder nicht tragbaren Endgerät, einem Server und/oder einer IT-Infrastruktur empfangen werden. Die Informationen und/oder der Updatestatus können an das tragbare Endgerät, den Server und/oder die IT-Infrastruktur gesendet werden.

Das Verfahren kann ferner den folgenden Schritt umfassen: Überprüfen, ob der zumindest eine Teil korrekt (z.B. vollständig und/oder fehlerfrei) empfangen wurde, vorzugsweise anhand einer von dem zumindest einen Teil umfassten Prüfsumme. Das Verfahren kann darüber hinaus den folgenden Schritt umfassen: Verwerfen des zumindest einen Teils, falls (z.B. nur falls) der zumindest eine Teil nicht korrekt empfangen wurde.

Das Verfahren kann den folgenden Schritt umfassen: Prüfen, ob der zumindest eine Teil ein letzter Teil des Softwareupdatepakets ist, vorzugsweise anhand einer von dem zumindest einen Teil umfassten eindeutigen Kennzeichnung als der letzte Teil. Das Verfahren kann darüber hinaus den folgenden Schritt umfassen: Durchführung einer Aktualisierung der Software der Ladestation unter Verwendung des (z.B. zumindest einen Teils des) Softwareupdatepakets, zum Beispiel falls oder nur falls der zumindest eine Teil der letzte Teil des Softwareupdatepakets ist.

Gemäß einem vierten Aspekt ist ein Server vorgesehen, der dazu eingerichtet ist, an ein tragbares Endgerät Programmanweisungen für das tragbare Endgerät zu senden, wobei die Programmanweisungen zumindest einen Teil eines Softwareupdatepakets für eine Software einer Ladestation für elektrisch betriebene Kraftfahrzeuge umfassen, und wobei die Programmanweisungen entweder ein Anwendungsprogramm für das tragbare Endgerät oder ein Update für ein Anwendungsprogramm für das tragbare Endgerät bilden.

Der Server kann dazu eingerichtet sein, das Softwareupdatepaket in den zumindest einen Teil und zumindest einen weiteren Teil aufzutrennen. Alternativ oder zusätzlich kann der Server dazu eingerichtet sein, in die Programmanweisungen Instruktionen oder Marker einzupflegen, die eine Aufteilung des Softwareupdatepakets in eine Vielzahl von Teilen inklusive des zumindest einen Teils ermöglichen.

Die Programmanweisungen können auch zumindest einen weiteren Teil des Softwareupdatepakets umfassen. Der Prozessor kann dazu eingerichtet sein, Informationen über einen momentanen Stand der Software der Ladestation und/oder eine momentane Hardwarekonfiguration der Ladestation, und/oder einen Updatestatus, der eine Anzahl und/oder Kennung von der Ladestation empfangener Teile des Softwareupdatepakets angibt, von der Ladestation, dem tragbaren Endgerät und/oder einer IT-Infrastruktur zu empfangen. Der Server kann dazu eingerichtet sein, die Informationen und/oder den Updatestatus an das tragbare Endgerät zu senden. Der Server kann dazu eingerichtet sein, dem zumindest einen Teil eine Prüfsumme und/oder eine eindeutige Kennzeichnung als der letzte Teil des Softwareupdatepakets anzuheften oder die Prüfsumme bzw. die eindeutige Kennzeichnung in den zumindest einen Teil einzufügen.

Gemäß einem fünften Aspekt ist ein Computerprogrammprodukt vorgesehen, umfassend Programmanweisungen für ein tragbares Endgerät, welche ein Anwendungsprogramm für das tragbare Endgerät oder ein Update für ein Anwendungsprogramm für das tragbare Endgerät bilden, wobei die Programmanweisungen zumindest einen Teil eines Softwareupdatepakets für eine Software einer Ladestation für elektrisch betriebene Kraftfahrzeuge umfassen.

Die Programmanweisungen können auch zumindest einen weiteren Teil oder sämtliche Teile des Softwareupdatepakets umfassen. Das Anwendungsprogramm ist beispielsweise eine "App" für das tragbare Endgerät, welche vorzugsweise auf das tragbare Endgerät über eine Netzwerkverbindung (z.B. über das Internet) heruntergeladen werden kann. Das Computerprogrammprodukt kann ein computerlesbares Medium wie eine CD, eine DVD, ein USB-Stick, eine SDD- oder HDD-Festplatte sein. Das Computerprogrammprodukt kann auch eine virtuelle Speichereinheit wie z.B. ein Cloud-Speicher sein. Das Computerprogrammprodukt kann ein Datenstrom oder eine auf einem Server vorgesehene oder mit diesem verbundene Speichereinheit sein.

Einzelne Merkmale, die bezüglich des ersten bis fünften Aspekts beschrieben wurden, können miteinander kombiniert werden. Insbesondere kann es sich bei einzelnen oder allen zu einem obigen Aspekt erwähnten Einheiten (z.B. der Server, die IT-Infrastruktur, das tragbares Endgerät, die Ladestation, das elektrisch betriebene Kraftfahrzeug, der Prozessor des tragbaren Endgeräts, die Sende- und Empfangsvorrichtung des tragbaren Endgeräts, der Prozessor der Ladestation, die Sende- und Empfangsvorrichtung der Ladestation) und/oder Daten (der zumindest eine Teil, der zumindest eine weitere Teil, die Vielzahl von Teilen, das Softwareupdatepaket, das Anwendungsprogramm, das Update für das Anwendungsprogramm, die Programmanweisungen, die Informationen über den momentanen Stand der Software der Ladestation, die Informationen über die momentane Hardwarekonfiguration der Ladestation, der Updatestatus) um dieselben Einheiten und/oder Daten eines oder mehrerer der weiteren Aspekte handeln. So kann es sich beispielsweise bei dem im fünften Aspekt erwähnten tragbaren Endgerät um das Endgerät gemäß dem ersten Aspekt handeln und die lokale Kommunikationsverbindung aus dem dritten Aspekt kann der lokalen Kommunikationsverbindung aus dem ersten und/oder zweiten Aspekt entsprechen.

### KURZE BESCHREIBUNG DER ZEICHNUNGEN

Weitere Vorteile, Einzelheiten und Merkmale der hier beschriebenen Vorrichtungen und Systeme ergeben sich aus der nachfolgenden Beschreibung von Ausführungsbeispielen sowie aus den Figuren, wobei dieselben strukturellen und/oder funktionellen Merkmale durchgehend mit denselben Bezugszeichen gekennzeichnet sind.
Fig. 1 zeigt eine schematische Darstellung einer beispielhaften Ausführungsform eines Systems mit einem Server, einem tragbaren Endgerät, einer Ladestation und einem Kraftfahrzeug;
Fig. 2 zeigt eine schematische Darstellung einer beispielshaften Ausführungsform von Programmanweisungen; und
Fig. 3 zeigt ein beispielhaftes Verfahren, das von einer Ladestation ausgeführt wird.

### DETAILLIERTE BESCHREIBUNG

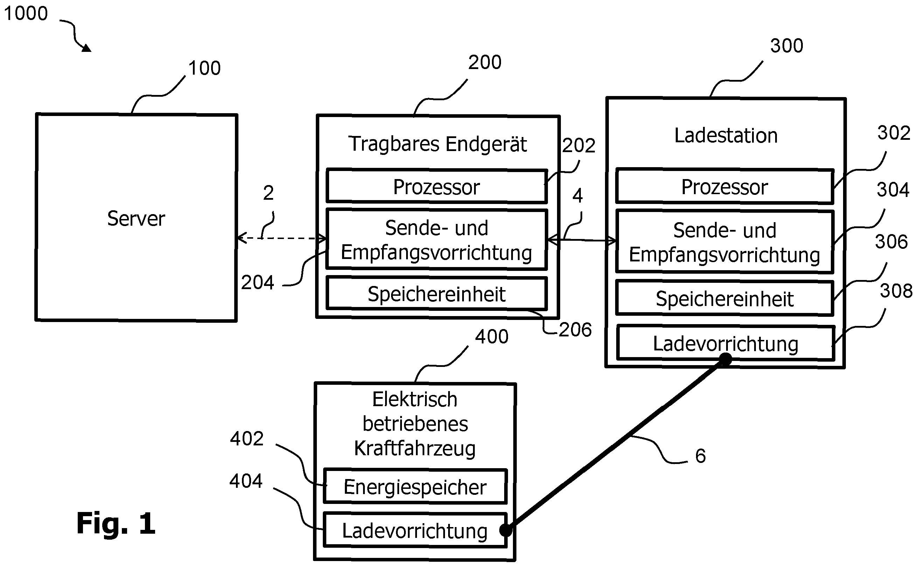

Fig. 1 zeigt eine schematische Darstellung einer beispielhaften Ausführungsform eines Systems 1000 mit einem Server 100, einem tragbaren Endgerät 200, einer Ladestation 300 und einem elektrisch betriebenen Kraftfahrzeug 400. Der Server 100 kann dem Server gemäß dem vierten Aspekt entsprechen. Das tragbare Endgerät 200 kann dem Endgerät gemäß dem ersten Aspekt entsprechen. Die Ladestation 300 kann der Ladestation gemäß dem zweiten Aspekt entsprechen.

Der Server 100 kann ein Cloud-Server sein. Der Server 100 kann zumindest ein Anwendungsprogramm für das tragbare Endgerät 200 und/oder zumindest ein Update für ein Anwendungsprogramm für das tragbare Endgerät 200 bereithalten. Vorzugsweise beinhaltet das Anwendungsprogramm und/oder das Update für das Anwendungsprogramm zumindest einen Teil eines Softwareupdatepakets für eine Software der Ladestation 300. Der Server 100 kann dazu eingerichtet sein, das Softwareupdatepaket in eine Vielzahl von Teilen inklusive des zumindest einen Teils zu untergliedern oder aufzutrennen. Das Softwareupdatepaket kann eine vollständige (z.B. aktuellere und/oder verbesserte) Softwareversion der Software der Ladestation 300 sein, oder ein Update der Software der Ladestation 300.

Der Server 100 ist über eine Kommunikationsverbindung 2 (z.B. über ein Mobilfunknetzwerk) mit dem tragbaren Endgerät 200 verbunden. Der Server 100 kann über die Kommunikationsverbindung 2 Programmanweisungen für das tragbare Endgerät an das tragbare Endgerät 200 senden, wobei die Programmanweisungen den zumindest einen Teil umfassen, und wobei die Programmanweisungen entweder ein Anwendungsprogramm für das tragbare Endgerät 200 oder ein Update für das Anwendungsprogramm für das tragbare Endgerät bilden.

Der Server 100 kann über die Kommunikationsverbindung 2 alternativ oder zusätzlich Informationen über einen momentanen Stand der Software der Ladestation 300 und/oder eine momentane Hardwarekonfiguration der Ladestation 300 an das tragbare Endgerät 200 senden. Der Server 100 kann über die Kommunikationsverbindung 2 alternativ oder zusätzlich einen Updatestatus, der eine Anzahl und/oder Kennung von der Ladestation 300 empfangener Teile des Softwareupdatepakets angibt, an das tragbare Endgerät 200 senden.

Der Server 100 kann mit einer IT-Infrastruktur (nicht dargestellt) kommunikativ verbunden oder Teil der IT-Infrastruktur sein, die wiederum mit der Ladestation 300 kommunikativ verbunden ist. Die IT-Infrastruktur kann auch als Backend bezeichnet werden. Der Server 100 kann auch direkt mit der Ladestation 300 kommunikativ verbunden sein. Der Server 100 kann dazu eingerichtet sein, von der Ladestation 300 die Informationen über den momentanen Stand der Software der Ladestation 300 und/oder die momentane Hardwarekonfiguration der Ladestation 300, und/oder den Updatestatus empfangen, beispielsweise über das Backend.

Das tragbare Endgerät ist beispielsweise ein Smartphone, ein Tablet-Computer oder ein Laptop. Das tragbare Endgerät umfasst einen Prozessor 202, eine Sende- und Empfangsvorrichtung 204 und eine Speichereinheit 206. Das tragbare Endgerät ist über eine lokale Kommunikationsverbindung 4 (z.B. eine WLAN-, Bluetooth- oder NFC-Verbindung) mit der Ladestation 300 verbunden.

Die Sende- und Empfangsvorrichtung 204 ist vorzugsweise dazu eingerichtet, Daten von der Ladestation 300 zu empfangen und/oder an diese zu senden. Die Sende-und Empfangsvorrichtung 204 kann ferner dazu eingerichtet sein, Daten von dem Server 100 zu empfangen und/oder an diesen zu senden. Beispielsweise ist die Sende-und Empfangsvorrichtung 204 dazu eingerichtet, von dem Server 100 den zumindest einen Teil des Softwareupdatepakets zu empfangen oder sämtliche Teile des Softwareupdatepakets. Die Sende- und Empfangsvorrichtung 204 kann dazu eingerichtet sein, Programmanweisungen von dem Server 100 zu empfangen, wobei die Programmanweisungen den zumindest einen Teil umfassen, und wobei die Programmanweisungen entweder das Anwendungsprogramm für das tragbare Endgerät oder das Update für das Anwendungsprogramm für das tragbare Endgerät bilden. Die Sende- und Empfangsvorrichtung 204 kann dazu eingerichtet sein, die Informationen über den momentanen Stand der Software der Ladestation 300 und/oder die momentane Hardwarekonfiguration der Ladestation 300, und/oder den Updatestatus zu empfangen, beispielsweise von der Ladestation 300 über die lokale Kommunikationsverbindung 4, von dem Backend und/oder von dem Server 100.

Die Sende- und Empfangsvorrichtung 204 ist vorzugsweise dazu eingerichtet, zumindest einen Teil des Softwareupdatepakets für die Software der Ladestation 300 über die lokale Kommunikationsverbindung 4 an die Ladestation 300 zu senden. Wie bereits beschrieben kann das Softwareupdatepaket den zumindest einen Teil und zumindest einen weiteren Teil umfassen. Die Sende- und Empfangsvorrichtung 204 kann dann ferner dazu eingerichtet sein, den zumindest einen Teil separat (z.B. zeitlich beabstandet oder datentechnisch getrennt) von dem zumindest einen weiteren Teil an die Ladestation zu senden. Die Sende- und Empfangsvorrichtung 204 kann ferner dazu eingerichtet sein, den zumindest einen Teil erst dann an die Ladestation 300 zu senden, wenn der zumindest eine weitere Teil erfolgreich (z.B. fehlerfrei, komplett und/oder innerhalb eines festgelegten Zeitraums) an die Ladestation 300 gesendet wurde.

Hierbei kann der zumindest eine weitere Teil durch ein anderes Gerät, zum Beispiel ein weiteres (nicht dargestelltes) tragbares Endgerät, durch das Backend oder durch den Server 100 an die Ladestation 300 gesendet worden sein. Alternativ kann die Sende- und Empfangsvorrichtung 204 dazu eingerichtet sein, den zumindest einen Teil und auch den zumindest einen weiteren Teil an die Ladestation zu senden. Beispielsweise ist die Sende- und Empfangsvorrichtung 204 dazu eingerichtet, sämtliche Teile des Softwareupdatepakets an die Ladestation 300 zu senden.

Die Sende- und Empfangsvorrichtung kann dazu eingerichtet sein, den zumindest einen Teil an die Ladestation 300 zu senden, sobald ein Ladevorgang durch die Ladestation 300 begonnen und/oder sobald die lokale Kommunikationsverbindung 4 aufgebaut wurde.

Der Prozessor 202 ist beispielsweise dazu eingerichtet, anhand der empfangenen Informationen über den momentanen Stand der Software der Ladestation 300 und/oder die momentane Hardwarekonfiguration der Ladestation 300 zu überprüfen, ob das Softwareupdatepaket zur Aktualisierung der Software der Ladestation 300 geeignet ist. Die Sende- und Empfangsvorrichtung 204 kann dazu eingerichtet sein, den zumindest einen Teil nur dann an die Ladestation 300 zu senden, wenn das Softwareupdatepaket zur Aktualisierung der Software der Ladestation 300 geeignet ist. Alternativ oder zusätzlich kann der Prozessor 202 dazu eingerichtet sein, anhand des empfangenen Updatestatus zu bestimmen, welche Teile des Softwareupdatepakets der Ladestation 300 fehlen. Die Sende- und Empfangsvorrichtung kann dazu eingerichtet sein, den zumindest einen Teil nur dann an die Ladestation 300 zu senden, wenn der zumindest eine Teil ein der Ladestation 300 fehlender Teil ist.

Die Speichereinheit 206 kann dazu eingerichtet sein, Daten wie z.B. die Programmanweisungen, das Anwendungsprogramm, das Update für das Anwendungsprogramm, die Informationen über den momentanen Stand der Software der Ladestation 300 und/oder die momentane Hardwarekonfiguration der Ladestation 300, den Updatestatus und/oder ein Betriebsprogramm des tragbaren Endgeräts zu speichern. Die Speichereinheit 206 kann dazu eingerichtet sein, Daten zu speichern, die von der Sende- und Empfangsvorrichtung 204 empfangen wurden und/oder Daten zu speichern, die von der Sende- und Empfangsvorrichtung 204 gesendet werden.

Der Prozessor 202 kann dazu eingerichtet sein, aus der Speichereinheit 206 die dort gespeicherten Daten zu laden und im Fall von ausführbaren Codedaten wie den Programmanweisungen, dem Anwendungsprogramm, dem Update für das Anwendungsprogramm oder dem Betriebssystem, die Codedaten auszuführen. Der Prozessor 202 kann auf die Speichereinheit 206 zugreifen um die dort abgelegten Daten zu laden. Insbesondere ist der Prozessor 202 dazu eingerichtet, die Sende-und Empfangsvorrichtung 204 so zu steuern, dass sie ausgewählte Daten an den Server 100 und/oder die Ladestation 300 sendet, die beispielsweise in der Speichereinheit 206 gespeichert sind. Der Prozessor 202 kann dazu eingerichtet sein, das Softwareupdatepaket in eine Vielzahl von Teilen inklusive des zumindest einen Teils und vorzugsweise auch inklusive des zumindest einen weiteren Teils zu untergliedern oder aufzutrennen. Beispielsweise ist der Prozessor 202 dazu eingerichtet, anhand von dem Server 100 in die Programmanweisungen eingefügter Marker das Softwareupdatepaket aufzuteilen.

Die Aufteilung des Softwarepakets in die Vielzahl von Teilen kann auch dynamisch erfolgen, beispielsweise anhand einer aktuellen, durchschnittlichen, maximalen oder minimalen Datenübertragungsrate der lokalen Kommunikationsverbindung 4. In anderen Worten kann der Prozessor 202 dazu eingerichtet sein, die Größe des zumindest einen Teils entsprechend einer aktuellen und/oder erwarteten zukünftigen (z.B. durchschnittlichen, maximalen oder minimalen) Datenübertragungsrate anzupassen oder den zumindest einen Teil mit einer dazu passenden Dateigröße auszuwählen, bevor der zumindest eine Teil von der Sende- und Empfangsvorrichtung 204 an die Ladestation 300 gesendet wird.

Die Ladestation 300 ist eingerichtet zum Laden eines zumindest teilweise elektrisch betriebenen bzw. angetriebenen Kraftfahrzeugs, worunter auch Kraftfahrzeuge mit zusätzlichem Verbrennungsmotor verstanden werden. Die Ladestation 300 umfasst einen Prozessor 302, eine Sende- und Empfangsvorrichtung 304, eine Speichereinheit 306 und eine Ladevorrichtung 308. Die Ladestation 300 ist über die lokale Kommunikationsverbindung 4 mit dem tragbaren Endgerät 200 verbunden.

Die Sende- und Empfangsvorrichtung 304 der Ladestation 300 ist vorzugsweise dazu eingerichtet, von dem tragbaren Endgerät 200 über die lokale Kommunikationsverbindung 4 den zumindest einen Teil des Softwareupdatepakets zu empfangen. Die Sende- und Empfangsvorrichtung 304 der Ladestation 300 kann dazu eingerichtet sein, von dem tragbaren Endgerät 200 über die lokale Kommunikationsverbindung 4 den zumindest einen weiteren Teil oder sämtliche Teile des Softwareupdatepakets zu empfangen. Die Sende- und Empfangsvorrichtung 304 der Ladestation 300 kann dazu eingerichtet sein, an das Backend, den Server 100 und/oder das tragbare Endgerät 200 die Informationen über den momentanen Stand der Software der Ladestation 300 und/oder die momentane Hardwarekonfiguration der Ladestation 300 zu senden. Die Sende- und Empfangsvorrichtung 304 der Ladestation 300 kann dazu eingerichtet sein, an das Backend, den Server 100 und/oder das tragbare Endgerät 200 den Updatestatus zu senden.

Der zumindest eine Teil kann eine Prüfsumme umfassen. Vorzugsweise umfasst jeder Teil des Softwareupdatepakets eine spezifische Prüfsumme. Der zumindest eine Teil kann ein letzter Teil des Softwareupdatepakets sein und eine eindeutige Kennzeichnung als der letzte Teil umfassen. Die Prüfsumme kann von dem Server 100 und/oder von dem tragbaren Endgerät 200 erstellt oder berechnet und dem zumindest einen Teil beigefügt oder eingeimpft werden. Die Prüfsumme kann auch als Checksumme bezeichnet werden und ist zum Beispiel eine MD5 Checksumme.

Der Prozessor 302 kann dazu eingerichtet sein, zu überprüfen, ob der zumindest eine Teil korrekt empfangen wurde und, falls der zumindest eine Teil nicht korrekt empfangen wurde, diesen zu verwerfen. Insbesondere kann der Prozessor 302 dazu eingerichtet sein, anhand der Prüfsumme zu überprüfen, ob der zumindest eine Teil korrekt empfangen wurde.

Der Prozessor 302 kann dazu eingerichtet sein, zu prüfen, ob der zumindest eine Teil der letzte Teil des Softwareupdatepakets ist, und falls der zumindest eine Teil der letzte Teil des Softwareupdatepakets ist, eine Aktualisierung der Software der Ladestation 300 unter Verwendung des Softwareupdatepakets durchzuführen. Insbesondere kann der Prozessor 302 dazu eingerichtet sein, anhand der eindeutigen Kennzeichnung als der letzte Teil zu prüfen, ob der zumindest eine Teil der letzte Teil des Softwareupdatepakets ist.

Die Speichereinheit 306 kann dazu eingerichtet sein, die Software der Ladestation 300 und/oder den empfangenen zumindest einen Teil des Softwareupdatepakets zu speichern. Bei der Software der Ladestation 300 kann es sich um eine sogenannte Firmware handeln. Die Speichereinheit 306 kann dazu eingerichtet sein, die Informationen über den momentanen Stand der Software der Ladestation 300 und/oder die momentane Hardwarekonfiguration der Ladestation 300, und/oder den Updatestatus zu speichern. Die Speichereinheit 306 kann dazu eingerichtet sein, Daten zu speichern, die von der Sende- und Empfangsvorrichtung 304 empfangen wurden und/oder Daten zu speichern, die von der Sende- und Empfangsvorrichtung 304 gesendet werden.

Der Prozessor 302 kann dazu eingerichtet sein, aus der Speichereinheit 306 die dort gespeicherten Daten zu laden und im Fall von ausführbaren Codedaten wie der Firmware, die Codedaten auszuführen. Der Prozessor 302 kann auf die Speichereinheit 306 zugreifen um die dort abgelegten Daten zu laden. Insbesondere ist der Prozessor 302 dazu eingerichtet, die Sende- und Empfangsvorrichtung 304 so zu steuern, dass sie ausgewählte Daten an den Server 100, das Backend und/oder das tragbare Endgerät 200 sendet, die beispielsweise in der Speichereinheit 306 gespeichert sind.

Der Prozessor 302 kann dazu eingerichtet sein, eine Vielzahl empfangener Teile des Softwareupdatepakets zu dem Softwareupdatepaket zusammenzusetzen. Beispielsweise ist der Prozessor 302 dazu eingerichtet, anhand von dem Server 100 oder dem tragbaren Endgerät 200 in die einzelnen Teile eingefügten Marker und/oder anhand der Kennung der einzelnen Teile das Softwareupdatepaket zusammenzusetzen. Beispielsweise ist der Prozessor 302 dazu eingerichtet, alle empfangenen Teile des Softwareupdatepakets derart in der Speichereinheit 306 zu speichern und/oder diese derart miteinander zu verknüpfen, dass das vollständige Softwareupdatepaket erhalten wird, welches von dem Prozessor 302 ausgeführt werden kann. Der Prozessor 302 kann dazu eingerichtet sein, die Aktualisierung der Software der Ladestation 300 anhand des (z.B. derart erzeugten bzw. zusammengesetzten) Softwareupdatepakets durchführen.

Das elektrisch betriebene Kraftfahrzeug 400 umfasst einen Energiespeicher 402 zum Speichern elektrischer Energie (z.B. einen Akkumulator) und eine Ladevorrichtung 404, welche zum Einspeisen elektrischer Energie in den Energiespeicher 492 ausgebildet ist. Die Ladevorrichtung 404 des elektrisch betriebenen Kraftfahrzeugs ist dazu eingerichtet, mit der Ladevorrichtung 308 der Ladestation 300 über eine Verbindung 6 stromübertragend gekoppelt zu werden. Die Verbindung 6 kann kabelgebunden oder drahtlos sein. Bei den Ladevorrichtungen 308 und 404 kann es sich um induktive, kapazitive oder kabelgebundene Ladevorrichtungen handeln. Der Prozessor 302 der Ladestation 300 kann dazu einreichtet sein, eine Kopplung der Ladevorrichtungen 308, 404 zu detektieren und ausgelöst durch diese Detektion die Übertragung des zumindest einen Teils des Softwareupdatepakets von dem tragbaren Endgerät 200 einzuleiten oder anzufordern.

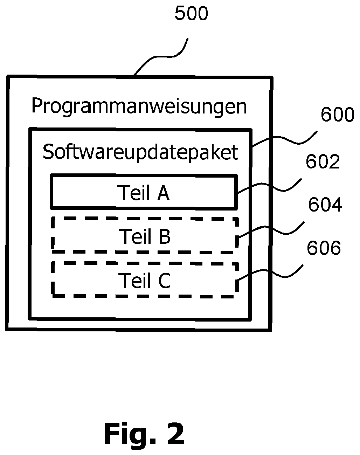

Fig. 2 zeigt eine schematische Darstellung einer beispielshaften Ausführungsform von Programmanweisungen 500. Wie bereits erwähnt handelt es sich bei den Programmanweisungen 500 vorzugsweise um ein Anwendungsprogramm für das tragbare Endgerät 200 oder um ein Update für ein Anwendungsprogramm des tragbaren Endgeräts 200. Es ist zu erkennen, dass die Programmanweisungen 500 zumindest einen Teil A (602) des Softwareupdatepakets 600 für die Software der Ladestation 300 für elektrisch betriebene Kraftfahrzeuge umfassen. Die Programmanweisungen können aber auch einen weiteren Teil B (604) und/oder einen weiteren Teil C (606) umfassen, die Teil des Softwareupdatepakets 600 sind. Die Unterteilung des Softwareupdatepakets in die Teile A, B und C (602, 604, 606) kann durch den Server 100 oder durch den Prozessor 202 des tragbaren Endgeräts 200 vorgenommen werden. Es versteht sich, dass die Zahl der Teile nicht zwingend drei betragen muss, jedoch vorzugsweise zumindest zwei beträgt. Die Programmanweisungen 500 können von dem Server 100 an das tragbare Endgerät 200 gesendet werden. Die Sende- und Empfangsvorrichtung 204 kann dazu eingerichtet sein, die Programmanweisungen 500 zu empfangen. Die Programmanweisungen können in Form eines Computerprogrammprodukts bereitgestellt werden. Das Computerprogrammprodukt kann insbesondere dem Computerprogrammprodukt gemäß dem fünften Aspekt entsprechen. Beispielsweise sind die Programmanweisungen auf einem computerlesbaren Medium gespeichert, bilden Teil eines Datenstroms oder formen einen herunterladbaren Datensatz. Die Sende- und Empfangsvorrichtung 204 kann dazu eingerichtet sein, den Teil A (602), B (604) und/oder C (606) an die Sende- und Empfangsvorrichtung 304 der Ladestation 300 zu senden.

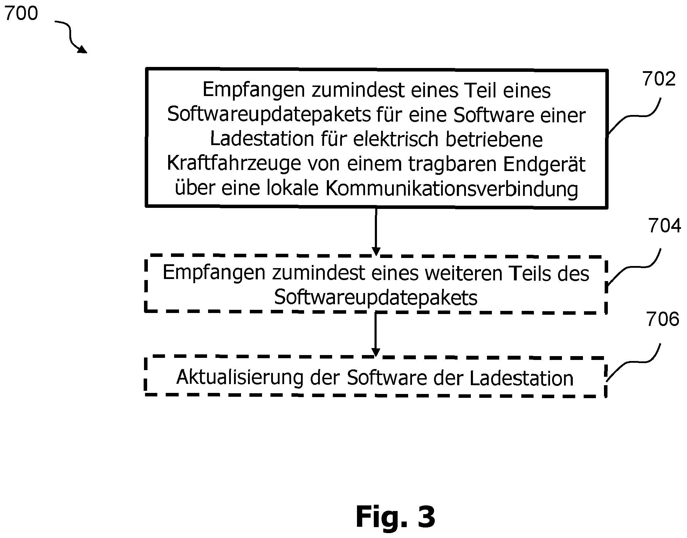

Fig. 3 zeigt ein beispielhaftes Verfahren 3000, das von einer Ladestation für elektrisch betriebene Kraftfahrzeuge ausgeführt wird. Das Verfahren kann insbesondere dem Verfahren gemäß dem dritten Aspekt entsprechen. Insbesondere kann das Verfahren von der Ladestation 300 ausgeführt werden. In einem Schritt 702 empfängt die Ladestation zumindest einen Teil (z.B. den oben beschriebenen zumindest einen Teil) eines Softwareupdatepakets (z.B. des oben beschriebenen Softwareupdatepakets) für eine Software der Ladestation von einem tragbaren Endgerät (z.B. von dem Endgerät 200) über eine lokale Kommunikationsverbindung (z.B. über die lokale Kommunikationsverbindung 4). Das Verfahren kann einen weiteren Schritt 704 umfassen, der entweder vor oder nach dem Schritt 702 ausgeführt wird. In dem Schritt 704 empfängt die Ladestation zumindest einen weiteren Teil des Softwareupdatepakets (z.B. den oben beschriebenen zumindest einen weiteren Teil). Das Verfahren kann weitere in Fig. 3 nicht dargestellte Schritte umfassen, die oben in Bezug auf die Ladestation 300 beschrieben wurden, insbesondere einen Schritt des Prüfens, ob der zumindest eine weitere Teil korrekt empfangen wurde und/oder einen Schritt des Prüfens, ob der zumindest eine Teil der letzte Teil des Softwareupdatepakets ist. Auch kann das Verfahren einen Schritt 706 umfassen, in dem die Aktualisierung der Software (z.B. Firmware) der Ladestation anhand des Softwareupdatepakets durchgeführt wird.

Nachstehend werden einzelne Aspekte der vorliegenden Offenbarung beschrieben.

Ein Softwareupdate (z.B. Firmwareupdate) für die Ladestation 300 kann in mehrere Abschnitte (Teile) unterteilt werden. In anderen Worten kann das Softwareupdatepaket mehrere Teile umfassen. Wenn ein Nutzer bzw. ein Kunde mit dem mobilen Endgerät 200, wie beispielsweise einem Smartphone, die lokale Kommunikationsverbindung 4 (WLAN, Bluetooth, NFC) mit der Ladestation 300 aufbaut (um z.B. einen Ladevorgang des Kraftfahrzeugs 400 einzuleiten oder sich an der Ladestation 300 zu authentifizieren), dann kann der zumindest eine Abschnitt des Softwareupdates (der zumindest eine Teil des Softwareupdatepakets) über die aufgebaute lokale Kommunikationsverbindung 4 von dem mobilen Endgerät 200 an die Ladestation übertragen werden. Die Abschnitte (Teile) können von der Datenmenge so gewählt sein, dass der zumindest eine Teil von dem mobilen Endgerät 200 zu der Ladestation 300 übertragen wird, wenn die lokale Kommunikationsverbindung 4 aufgebaut ist und der Nutzer mit der Ladestation 300 interagiert. Die Datenmenge der Abschnitte könnten beispielsweise 2,5 oder 5 Megabyte (MB) groß sein.

Ein Nutzer bzw. Kunde kann eine Smartphone-Applikation ("App") zum Interagieren mit einer Ladestation auf seinem Smartphone installiert haben. In anderen Worten kann auf dem tragbaren Endgerät 200 ein Anwendungsprogramm für das tragbare Endgerät installiert sein. Das Anwendungsprogramm kann z.B. die echarge+ App von der innogy emobility solutions GmbH sein. Das Anwendungsprogramm kann auch dazu verwendet werden, eine freie Ladestation zu suchen. Das Anwendungsprogramm bietet beispielsweise bei der Suche freier Ladestationen nur diejenigen Ladestationen an, die mit dem mobilen Endgerät 200 und/oder mit dem Anwendungsprogramm kompatibel sind.

Die Smartphone-App bzw. das Anwendungsprogramm kann mehrere Abschnitte eines Softwareupdates (also mehrere Teile des Softwareupdatepakets) umfassen. Heutzutage macht es in der Regel für einen Nutzer keinen Unterschied, ob eine Smartphone-Applikation 40 oder 80 MB groß ist, da die Datenspeicher auf mobilen Endgeräten fortlaufend größer dimensioniert werden. Die Größe einer Smartphone-Applikation wird für einen Nutzer hinsichtlich der Entscheidung, ob er die Smartphone-Applikation herunterladen und verwenden möchte also nicht ausschlaggebend sein. Daher kann die Smartphone-App vorteilhafterweise ohne negative Folgen mehrere Abschnitte des Softwareupdates umfassen. Vorzugsweise ist ein Abschnitt bzw. Teil des Softwareupdates bzw. Softwareupdatedatenpakets nicht größer als einige Prozent (z.B. 1%, 3%, 5%, 10% oder 15%) der Gesamtgröße der Smartphone-App bzw. des Anwendungsprogramms.

Wenn ein Nutzer mit der Ladestation 300 interagiert, indem er die lokale Kommunikationsverbindung 4 mit der Ladestation 300 aufbaut und mittels der Smartphone-App einen Ladevorgang des Kraftfahrzeugs 400 einleitet, dann kann die momentan auf der Ladestation 300 installierte Software ihren Versionsstand dem mobilen Endgerät 200 mitteilen. Wenn auf bzw. in der Smartphone-App eine neuere und mit der Ladestation 300 kompatible Software(update)version vorhanden ist, kann zumindest ein Abschnitt des Softwareupdates (der zumindest eine Teil des Softwareupdatepakets) von dem mobilen Endgerät 200 an die Ladestation 300 übertragen werden. Sobald auf der Ladestation 300 alle Abschnitte eines Softwareupdates vorhanden sind, kann ein Softwareupdate durchgeführt werden.

Zur Einleitung einer Übertragung können zwischen der Ladestation 300 und dem mobilen Endgerät 200 Informationen über eine aktuelle Softwareversion übertragen werden. Diese Informationen können von der Ladestation 300 an das mobile Endgerät 200 übermittelt werden, wenn die lokale Kommunikationsverbindung 4 aufgebaut wurde. Mittels dieser Informationen kann auf dem mobilen Endgerät 200 festgestellt werden, ob eine neue Softwareversion für die Ladestation 300 verfügbar ist. Die Informationen können ebenfalls eine Information über die vorhandene Hardware der Ladestation 300 umfassen, so dass eine Kompatibilität der Ladestation 300 mit einer Softwareversion festgestellt werden kann. Die zu installierende Software sollte schließlich auf der Hardware der Ladestation 300 korrekt ausführbar sein. Alternativ können die vorgenannten Informationen in der IT-Infrastruktur (bzw. auf dem Server 100) bereits vorhanden sein, so dass die Smartphone-Applikation von der IT-Infrastruktur (bzw. von dem Server 100) die Informationen abrufen kann. In diesem Fall müssen diese Informationen nicht gesondert zwischen der Ladestation 300 und dem mobilen Endgerät 200 ausgetauscht werden.

Zur Einleitung einer Übertragung können zwischen der Ladestation 300 und dem mobilen Endgerät 200 Informationen über auf der Ladestation 300 vorhandene Abschnitte der neuen Softwareversion (z.B. eine Anzahl und/oder Kennung von der Ladestation 300 korrekt empfangener Teile des Softwareupdatepakets) abgespeichert sein. Bereits bei vorangegangen lokalen Kommunikationsverbindungen (z.B. durch andere Endgeräte) können Abschnitte einer der neuen Softwareversion erfolgreich an die Ladestation 300 übertragen werden. Die Informationen über die vorhandenen Abschnitte kann von der Smartphone-Applikation dazu genutzt werden, zu bestimmen, welche Abschnitte noch zu übertragen sind. Daher könnten die Informationen über die vorhandene Abschnitte von der Ladestation 300 an das mobile Endgerät 200 vor oder zu Beginn der Übertragung des zumindest einen Teils übertragen werden, so dass von dem Endgerät 200 nur noch fehlende Abschnitte übertragen werden. Es wäre bei diesen Informationen auch vorstellbar, dass sie bereits in der IT-Infrastruktur (bzw. auf dem Server 100) hinterlegt sind. So könnten diese Informationen von der Smartphone-Applikation bei der IT-Infrastruktur (bzw. von dem Server 100) abgerufen werden.

Wenn ein Abschnitt einer Softwareversion übertragen wurde, könnte seitens der Ladestation 300 anhand einer Checksumme sichergestellt werden, ob der Abschnitt korrekt übertragen wurde. Daher könnte ein jeder Abschnitt eine Checksumme haben, so dass eine korrekte Datenübertragung gewährleistet werden kann. Wenn ein Abschnitt nicht korrekt übertragen wurde (zum Beispiel wenn eine von der Ladestation 300 berechnete Checksumme eines empfangenen Abschnitts ungleich der in demselben Abschnitt abgespeicherten Checksumme ist), kann der falsch übertragende Abschnitt seitens der Ladestation 300 verworfen werden. Eine solche Checksumme kann beispielsweise eine MD5-Checksumme sein.

Sobald auf der Ladestation 300 alle Abschnitte eines Softwareupdates vorhanden sind, kann ein Softwareupdate durchgeführt werden. Hierfür könnte ein finaler/letzter Abschnitt eine Information umfassen, mit welcher festgestellt werden kann, dass nun alle Abschnitte bzw. Teile eines Softwareupdates bzw. Softwareupdatepakets übertragen wurden.

Die vorliegende Offenbarung bezieht sich nicht nur auf kapazitive oder induktive Ladestationen. Sie ist ebenso bei sogenannten Smartpoles mit einer Lademöglichkeit für Elektrofahrzeuge anwendbar.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Tragbares Endgerät (200), umfassend einen Prozessor (202) und eine Sende-und Empfangsvorrichtung (204), die dazu eingerichtet ist, zumindest einen Teil (602) eines Softwareupdatepakets (600) für eine Software einer Ladestation (300) für elektrisch betriebene Kraftfahrzeuge (400) über eine lokale Kommunikationsverbindung (4) an die Ladestation (300) zu senden.

2. Tragbares Endgerät (200) nach Anspruch 1, wobei das Softwareupdatepaket (600) den zumindest einen Teil (602) und zumindest einen weiteren Teil (604; 606) umfasst, wobei die Sende- und Empfangsvorrichtung (204) ferner dazu eingerichtet ist, den zumindest einen Teil (602) separat von dem zumindest einen weiteren Teil (604; 606) an die Ladestation (300) zu senden.

3. Tragbares Endgerät (200) nach Anspruch 2, wobei die Sende- und Empfangsvorrichtung (204) ferner dazu eingerichtet ist, den zumindest einen Teil (602) erst dann an die Ladestation (300) zu senden, wenn der zumindest eine weitere Teil (602; 604) erfolgreich an die Ladestation (300) gesendet wurde.

4. Tragbares Endgerät (200) nach Anspruch 2 oder 3, wobei die Sende- und Empfangsvorrichtung (204) ferner dazu eingerichtet ist, den zumindest einen Teil (602) und den zumindest einen weiteren Teil (604; 606) an die Ladestation (300) zu senden.

5. Tragbares Endgerät (200) nach einem der Ansprüche 1 bis 4, wobei die Sende- und Empfangsvorrichtung (204) ferner dazu eingerichtet ist, Programmanweisungen (500) für das tragbare Endgerät (200) von einem Server (100) zu empfangen, wobei die Programmanweisungen (500) den zumindest einen Teil (602) umfassen, und wobei die Programmanweisungen (500) entweder ein Anwendungsprogramm für das tragbare Endgerät (200) oder ein Update für ein Anwendungsprogramm für das tragbare Endgerät (200) bilden.

6. Tragbares Endgerät (200) nach Anspruch 5, wobei der Prozessor (202) des tragbaren Endgeräts (200) dazu eingerichtet ist, das Softwareupdatepaket (600) aus den Programmanweisungen (500) zu extrahieren und in den zumindest einen Teil (602) und zumindest einen weiteren Teil (604; 606) aufzutrennen.

7. Tragbares Endgerät (200) nach einem der Ansprüche 1 bis 6, wobei
der zumindest eine Teil (602) eine Prüfsumme umfasst; und/oder wobei
der zumindest eine Teil (602) ein letzter Teil des Softwareupdatepakets (600) ist und eine eindeutige Kennzeichnung als der letzte Teil umfasst; und/oder wobei
die Sende- und Empfangsvorrichtung (204) ferner dazu eingerichtet ist, den zumindest einen Teil (602) an die Ladestation (300) zu senden, sobald ein Ladevorgang durch die Ladestation (300) begonnen und/oder sobald die lokale Kommunikationsverbindung (4) aufgebaut wurde; und/oder wobei
die Sende- und Empfangsvorrichtung (204) ferner dazu eingerichtet ist, von der Ladestation (300) oder einem Server (100) Informationen über einen momentanen Stand der Software der Ladestation (300) und/oder eine momentane Hardwarekonfiguration der Ladestation (300) zu empfangen, wobei der Prozessor (202) dazu eingerichtet ist, anhand der Informationen zu überprüfen, ob das Softwareupdatepaket (600) zur Aktualisierung der Software der Ladestation (300) geeignet ist, und wobei die Sende- und Empfangsvorrichtung (204) ferner dazu eingerichtet ist, den zumindest einen Teil (602) nur dann an die Ladestation zu senden, wenn das Softwareupdatepaket (600) zur Aktualisierung der Software der Ladestation (300) geeignet ist; und/oder wobei
die Sende- und Empfangsvorrichtung (204) ferner dazu eingerichtet ist, von der Ladestation (300) oder einem Server (100) einen Updatestatus zu empfangen, der eine Anzahl und/oder Kennung von der Ladestation (300) empfangener Teile (602; 604; 606) des Softwareupdatepakets (600) angibt, wobei der Prozessor (202) dazu eingerichtet ist, anhand des Updatestatus zu bestimmen, welche Teile des Softwareupdatepakets (600) der Ladestation (300) fehlen, und wobei die Sende- und Empfangsvorrichtung (204) ferner dazu eingerichtet ist, den zumindest einen Teil (602) nur dann an die Ladestation (300) zu senden, wenn er ein der Ladestation (300) fehlender Teil ist.

8. Ladestation (200) für elektrisch betriebene Kraftfahrzeuge (400), umfassend einen Prozessor (302) und eine Sende- und Empfangsvorrichtung (304), die dazu eingerichtet ist, von einem tragbaren Endgerät (200) über eine lokale Kommunikationsverbindung (4) zumindest einen Teil (602) eines Softwareupdatepakets (600) für eine Software der Ladestation (300) zu empfangen.

9. Ladestation (300) nach Anspruch 8, wobei der Prozessor (302) dazu eingerichtet ist, zu überprüfen, ob der zumindest eine Teil (602) korrekt empfangen wurde und, falls der zumindest eine Teil (602) nicht korrekt empfangen wurde, diesen zu verwerfen.

10. Ladestation (300) nach Anspruch 9, wobei der Prozessor (302) dazu eingerichtet ist, anhand einer von dem zumindest einen Teil (602) umfassten Prüfsumme zu überprüfen, ob der zumindest eine Teil (602) korrekt empfangen wurde.

11. Ladestation (300) nach einem der Ansprüche 8 bis 10, wobei der Prozessor (302) dazu eingerichtet ist, zu prüfen, ob der zumindest eine Teil (602) ein letzter Teil des Softwareupdatepakets (600) ist, und falls der zumindest eine Teil (602) der letzte Teil des Softwareupdatepakets (600) ist, eine Aktualisierung der Software der Ladestation (300) unter Verwendung des Softwareupdatepakets (600) durchzuführen,
wobei optional, der Prozessor (302) dazu eingerichtet ist, anhand einer von dem zumindest einen Teil (602) umfassten eindeutigen Kennzeichnung als der letzte Teil zu prüfen, ob der zumindest eine Teil (602) der letzte Teil des Softwareupdatepakets (600) ist.

12. Verfahren (700) zum Aktualisieren einer Software einer Ladestation (300) für elektrisch betriebene Kraftfahrzeuge (400), umfassend den folgenden durch die Ladestation (300) ausgeführten Verfahrensschritt:
Empfangen (702) zumindest eines Teils (602) eines Softwareupdatepakets (600) für die Software der Ladestation (300) von einem tragbaren Endgerät (200) über eine lokale Kommunikationsverbindung (4).

13. Server (100), dazu eingerichtet, an ein tragbares Endgerät (200) Programmanweisungen (500) für das tragbare Endgerät (200) zu senden, wobei die Programmanweisungen (500) zumindest einen Teil (602) eines Softwareupdatepakets (600) für eine Software einer Ladestation (300) für elektrisch betriebene Kraftfahrzeuge (400) umfassen, und wobei die Programmanweisungen (500) entweder ein Anwendungsprogramm für das tragbare Endgerät (200) oder ein Update für ein Anwendungsprogramm für das tragbare Endgerät (200) bilden.

14. Server (100) nach Anspruch 13, dazu eingerichtet, das Softwareupdatepaket (600) in den zumindest einen Teil (602) und zumindest einen weiteren Teil (604; 606) aufzutrennen.

15. Computerprogrammprodukt, umfassend Programmanweisungen (500) für ein tragbares Endgerät (200), welche ein Anwendungsprogramm für das tragbare Endgerät (200) oder ein Update für ein Anwendungsprogramm für das tragbare Endgerät (200) bilden, wobei die Programmanweisungen (500) zumindest einen Teil (602) eines Softwareupdatepakets (600) für eine Software einer Ladestation (300) für elektrisch betriebene Kraftfahrzeuge (400) umfassen.
